# EUROPEAN PATENT APPLICATION

(11) **EP 4 825 887 A1**
(43) Date of publication of application: **21.10.2026**
(21) Application number: 25305539.6
(22) Date of filing: 14.04.2025
(51) Int. Cl.: C08F 120/56, B01D 21/00, C02F 1/56, C08F 2/10, C08J 3/12, C08J 3/075

(54) **WATER-SOLUBLE HYDROXAMIC ACID POLYMERS IN POWDER FORM**

(71) Applicant: SNF Group, 42160 Andrézieux-Bouthéon (FR)
(72) Inventor: TAVERNIER, Bruno, 42160 ANDREZIEUX-BOUTHEON (FR); BONNEAU, Aurélien, 42160 ANDREZIEUX-BOUTHEON (FR); ROUX, Christophe, 42160 ANDREZIEUX-BOUTHEON (FR); KIEFFER, Johann, 42160 ANDREZIEUX-BOUTHEON (FR); FAVERO, Cédrick, 42160 ANDREZIEUX-BOUTHEON (FR)
(74) Representative: Ipsilon

(57) **Abstract**

The invention relates to a gel polymerization method for preparing water-soluble polymers, with a weight-average molecular weight greater than 1 million Dalton, in powder form, used in particular as flocculants in the Bayer process.

## Description

### FIELD OF INVENTION

The present invention concerns water-soluble polymers, with a weight-average molecular weight greater than 1 million Dalton, in powder form, used in particular as flocculants in the Bayer process. More specifically, the invention concerns a gel polymerization process to obtain water-soluble high molecular weight hydroxamic acid polymers.

### PRIOR ART

Hydroxamic acids are a class of organic compounds having the structure R-CO-NHOH, where R represents an organic side chain.

Hydroxamic acids have interesting properties, particularly as metal complexing agents. Indeed, hydroxamic acid groups have a strong affinity for metal ions, forming stable complexes with various transition metals. This property is useful in mining applications such as metal separation and purification, especially for flotation.

Hydroxamates are used as collectors for the flotation of oxidized minerals such as iron oxides (hematite), copper oxides (cuprite, malachite) and zinc oxides (smithsonite). Hydroxamates form stable complexes with the metal cations present on the surface of these minerals, facilitating adhesion of the mineral particles to the air bubbles in the flotation cell.

Nevertheless, the hydroxamates used in flotation are small molecules with limited applications, particularly in the solid/liquid separation stages, which are essential in mining processes to concentrate either tailings or concentrates of interest. High molecular weight polymers bearing hydroxamic acid groups have been developed to flocculate iron particles in suspension.

Water-soluble hydroxamic acid polymers with a high molecular weight are commonly used as flocculants in the Bayer process. The hydroxamic acid group is highly selective to iron metal leading to improved overflow clarity in the red mud separation stage of the Bayer process.

The weight-average molecular weight of these water-soluble polymers is generally between 1 million Daltons and 50 million Daltons. These polymers are mainly obtained by solution or inverse emulsion polymerization. They are therefore used in solution or inverse emulsion form. Polymers in powder form can also be obtained from these solutions or inverse emulsions by implementing a drying step *(drum drying* for solution or *spray-drying* for emulsion).

Patent US 4,868,248 describes the synthesis of an aqueous acrylic acid homopolymer in which some of the carboxylic acid groups are converted to hydroxamic acid groups by reaction with free hydroxylamine at acidic pH and elevated temperatures. The polymers obtained are in liquid form, with a very limited molecular weight (less than 2 million Daltons), with a limiting active content to have a pumpable fluid.

Patent EP 0 314 855 describes the use of high molecular weight polymers for clarifying the red sludge generated by the Bayer process.

Patent US 4,902,751 describes the preparation of hydroxamic acid-functionalized polymers, obtained by reacting an acrylamide homopolymer with a hydroxylamine salt at basic pH. The polymers obtained are either in the form of an aqueous solution (molecular weight less than 2 million Da), or in the form of an inverse emulsion (molecular weight greater than 15 million Da).

Patent EP 0 514 648 exclusively describes the synthesis of high molecular weight polymers comprising hydroxamate groups in inverse emulsion (same conditions as in patent US4902751).

Patent US 5,368,745 describes the use of polymers containing hydroxamic acid groups obtained using the process described in the US 4,902,751 patent for the selective flocculation of iron oxides in ore mixtures.

Patent US 5,688,403 describes the use in combination of a cationic polymer and a polymer in liquid comprising hydroxamic acid pendant groups to remove metal ions (Cu/ Pb/ Zn/ Ni) from an aqueous solution.

Patent US 8,685,256 describes a method for preparing a high molecular weight polymer comprising hydroxamic acid groups in inverse emulsion with a polymer concentration increased compared with the state of the art (greater than 20%) and its use as a flocculant for red mud.

Thus, the current state of the art describes numerous methods for obtaining polymers comprising hydroxamic acid functions, but none describes a process for obtaining a high molecular weight polymer in particulate form. Furthermore, the literature highlights numerous applications for this type of chemistry, but their use remains limited by the availability of this type of polymer in particulate form.

The growing demand for eco-design makes these hydroxamate-functionalized polymers uncompetitive. Firstly, emulsion or solution formulations require a lot of energy and costly transport logistics (diluted polymer). Secondly, the emulsion form has the disadvantage of introducing an oily phase into the Bayer process, to the detriment of environmental impact (emission of volatile organic compounds (VOCs) and COD/BOD from the aqueous effluent discharged by aluminum smelters). The oil accumulated in the Bayer process is also subject to degradation and the formation of humic acid, which reduces performance. Finally, existing dry forms require energy-intensive drying processes that are likely to degrade the polymer at least partially. There is therefore a need for high molecular weight hydroxamic acid polymers in particulate form, with a reduced design carbon footprint for transport and operation.

### DESCRIPTION OF THE INVENTION

Unexpectedly, to address this eco-design issue, the Applicant has discovered that a water-soluble hydroxamic acid polymer with a weight-average molecular weight greater than 1 million Dalton, in powder form, can be prepared by a gel polymerization process.

More precisely, the invention concerns a gel polymerization method to obtain a water-soluble polymer **P2** of weight-average molecular weight greater than 1 million Dalton in powder form, said process comprising at least the following successive steps:
a) Preparing an aqueous solution **S** comprising one or more monomer(s) including at least (meth)acrylamide, a hydroxylamine salt, and a sulfate salt of sodium or ammonium,
   wherein the aqueous solution **S** comprises an amount of (meth)acrylamide of from 10 to 60% by weight of the aqueous solution **S,**
   wherein the aqueous solution **S** comprises an amount MOL_{hydro} of the hydroxylamine salt, wherein MOL_{hydro} is from 10 to 75 mol% based on the number of moles of (meth)acrylamide, wherein the aqueous solution **S** comprises an amount MOL_{sulf} of the sulfate salt of sodium or ammonium, wherein MOL_{sulf} is from 0.9MOL_{hydro} to 1.1MOL_{hydro};
b) Adding a pH regulator to the aqueous solution **S** to maintain the aqueous solution **S** at a pH below 3.0;
c) Adding polymerization initiator(s) to the aqueous solution **S,** which is at a temperature of between -5°C and 30°C;
d) Forming a gel of polymer **P1** by polymerizing, in a polymerization reactor, the monomer(s) in the aqueous solution **S;**
e) Discharging the resulting gel of polymer **P1** from the polymerization reactor and granulating the gel of polymer **P1**;
f) Mixing an alkali metal hydroxide or an alkali metal carbonate with the granulated gel of polymer **P1** at a temperature of between 50 and 90°C, for between 30 and 180 minutes, to obtain a polymer **P2;**
g) Drying the polymer **P2** to obtain polymer **P2** in powder form;
h) Grinding and sieving the powdered polymer **P2**

The invention also includes all possible combinations of the various embodiments disclosed, whether they are preferred embodiments or given by way of example. Furthermore, when ranges of values are indicated, the limit values are included in these ranges. The disclosure also includes all of the combinations between the limit values of these ranges of values. For example, the ranges of values "1-20, preferably 5-15" imply disclosure of the ranges "1-5", "1-15", "5-20" and "15-20" and the values 1, 5, 15 and 20.

"Polymer" means a homopolymer prepared from a hydrophilic monomer or a copolymer prepared from at least two different monomers, it may therefore be a copolymer of at least two monomers chosen from among: anionic hydrophilic monomers, non-ionic hydrophilic monomers, and their mixtures.

The polymer obtained by the process of the invention has a molecular weight Mw of at least 1 million Dalton, preferably between 1 and 40 million Daltons, more preferably between 1 and 30 million Daltons, more preferably between 2 and 20 million Daltons, and even more preferably between 3 and 15 million Daltons. Molecular weight Mw is defined as weight-average molecular weight.

The molecular weight Mw is advantageously determined by the intrinsic viscosity of the polymer. The intrinsic viscosity can be measured by methods known to a person skilled in the art and can be calculated from the reduced viscosity values for different polymer concentrations by a graphical method consisting in plotting the reduced viscosity values (y-axis) against the concentration (x-axis) and extrapolating the curve to zero concentration. The intrinsic viscosity value is plotted on the y-axis or using the least-squares method. The molecular weight can then be determined using the Mark-Houwink equation:
[η] = K.Mw^{α}
[η] represents the intrinsic viscosity of the polymer as determined by the solution viscosity method.
K represents an empirical constant.
Mw represents the molecular weight of the polymer.
α represents the Mark-Houwink coefficient.
K and α depend on the polymer-solvent system.

The term "water-soluble polymer" should be understood to mean a polymer that gives an aqueous solution without insoluble particle, when it is dissolved under stirring at 25°C and with a concentration of 10 g.L⁻¹ in deionised water.

Due to the presence of hydroxamic acid moieties on the polymer, polymer P1 is typically an anionic water-soluble polymer containing one or more non-ionic hydrophilic monomers.

Due to the presence of hydroxamic acid moieties on the polymer, the polymer P2 is typically an anionic water-soluble polymer containing one or more non-ionic hydrophilic monomers.

The hydroxamic acid polymer results from the reaction of amide groups -C(O)-NH₂, such as present in (meth)acrylamide, or carboxylate groups -C(O)ONa, such as present in sodium (meth)acrylate, with hydroxylamine NH₂OH or one of its salts.

Polymer P2 may further comprise one or more hydrophilic anionic monomers such as (meth)acrylic acid or the sodium salt thereof.

The term "hydrophilic monomer" should be understood to mean a monomer that has an octanol-water partition coefficient, K_{ow}, less than or equal than 1, in which the partition coefficient K_{ow} is determined at 25°C in an octanol-water mixture with a volume ratio of 1/1, at a pH of between 6 and 8.

Advantageously, the non-ionic hydrophilic monomer is (meth)acrylamide.

Anionic hydrophilic monomers sodium (meth)acrylate may result from the hydrolysis of (meth)acrylamide during the formation of hydroxamate and/or polymerization of (meth)acrylic acid.

The polymer **P2** may be linear or may further be structured by a branching agent. By structured polymer is meant a non-linear polymer, for instance branched, star-shaped or comb-shaped polymer.

The structuring agent is advantageously chosen from:
- structure agents advantageously chosen from the group comprising polyethylenically unsaturated compounds (having, as a minimum, two unsaturated functions) different from the monomers previously described, like for example, vinyl functions, in particular, allylic or acrylic, and, for example, methylene bis acrylamide (MBA), triallylamine, tetraallylammonium chloride or 1,2 dihydroxyethylene bis-(N-acrylamide) can be cited,
- compounds having at least two epoxy functions,
- compounds having at least one unsaturated function and an epoxy function,
- macro-initiators such as polyperoxides, polyazoics and transfer polyagents, such as polymercaptan polymers, and polyols,
- functionalized polysaccharides,
- water-soluble metal complexes composed:
   * of a metal of valence greater than 3 such as, as an example and in a non-limiting manner, aluminium, boron, zirconium, or also titanium, and
   * of a ligand carrying a hydroxyl function.

The quantity of structuring agent in the polymer **P2** is advantageously less than 1000 ppm by weight relative to the total weight of the monomers of the polymer, preferably less than 100 ppm by weight, and more preferably less than 10 ppm by weight.

When the polymer comprises at least one structuring agent, it remains water-soluble. A person skilled in the art knows how to adjust the quantity of branching agent and, possibly, the quantity of transfer agent needed to obtain this result.

In one embodiment, the polymer is free of structuring agent.

### Step a) Preparation of the aqueous solution S

The method of the invention comprises a first step (step a) of preparing an aqueous solution S comprising one or more monomer(s) including at least (meth)acrylamide, a hydroxylamine salt, and a sulfate salt of sodium or ammonium

The aqueous solution **S** comprises an amount of (meth)acrylamide of from 10 to 60% by weight of the aqueous solution **S,** advantageously between 15 and 55 % and even more advantageously between 20 and 50 %.

In some embodiments, step a) may comprise the addition of (meth)acrylic acid, preferably in an amount of less than 10 mol% based on the number of moles of (meth)acrylamide. Advantageously, step a) does not comprise the addition of (meth)acrylic acid.

The aqueous solution **S** comprises an amount MOL_{hydro} of the hydroxylamine salt comprised from 10 to 75 mol% based on the number of moles of (meth)acrylamide and an amount MOL_{sulf} of the sulfate salt of sodium or ammonium comprised from 0.9MOL_{hydro} to 1.1MOL_{hydro} (for example when the amount of hydroxylamine is of 2 mol i.e. MOL_{hydro} = 2 mol, that means the amount of sulfate salt of sodium or ammonium will be comprised from 1.8 mol to 2.2 mol (1.8 mol ≤MOL_{sulf}≤2.2 mol)).

Preferably, the hydroxylamine salt is hydroxylamine sulfate or hydroxylamine chloride.

### Step b) pH adjustment of the aqueous solution S

In step b) of the method of the invention, a pH regulator is added to the aqueous solution **S of** step a) to maintain the pH of the solution below 3.0, preferably below 2.5.

The pH regulator is typically an acid in aqueous solution like an aqueous solution of phosphoric acid.

### Step c) Addition of a polymerization initiator

In step c), a polymerization initiator is added to the aqueous solution S of step b).

This solution, also called the charge to be polymerized, is adjusted to an initiation temperature of between -5°C to 30°C. Advantageously, this initiation temperature is adjusted between 0 and 20°C.

The usual polymerization initiators are, for example, sulphur compounds such as thioglycolic acid, mercaptan alcohols, dodecyl mercaptan, amines such as ethanolamine, diethanolamine, morpholine and phosphites such as sodium hypophosphites. In the case of a RAFT-type polymerization, specific polymerization regulators such as those comprising a transfer group comprising the -S-CS- function, may be used. Mention may in particular be made of these compounds of the family of xanthates (-S-CS-O-), dithioesters (-S-CS-C), trithiocarbonates (-S-CS-S-), or dithiocarbamates (-S-CS-N). Among the compounds of the xanthate family, O-ethyl-S-(1-methoxy carbonyl ethyl)xanthate, is widely used for its compatibility with monomers of acrylic nature. Among the trithiocarbonates series, preferred compounds are 3-((((1-carboxyethyl)thio)carbonothioyl)thio)propanoic acid and 2 2'- carbonothioylbis(thio) bis 2-methylpropanoic acid.

The polymerization initiators used may be any compound which dissociates into radicals under polymerization conditions, for example: organic peroxides, hydroperoxides, hydrogen peroxide, persulfates, azo compounds, and redox catalysts. The use of water-soluble initiators is preferred. In some cases, it is advantageous to use mixtures of various polymerization initiators, for example, mixtures of redox catalysts and azo compounds.

Suitable organic peroxides and hydroperoxides are, for example, sodium or potassium peroxodisulfate, acetylacetone peroxide, methyl ethyl ketone peroxide, tert-butyl hydroperoxide, cumene hydroperoxide, tert-amyl perpivalate, tert-butyl perpivalate, tert-butyl perneohexanoate, tert-butyl perbuto-butylate, -ethyl hexanoate, tert-butyl perisononanoate, tert-butyl permaleate, tert-butyl perbenzoate, tert-butyl per-3,5,5-trimethylhexanoate and tert-amyl per neodecanoate.

Appropriate persulphates may be selected from alkali metal persulphates such as sodium persulphate.

Suitable azo initiators are advantageously water-soluble and chosen from the following list: 2,2'-azobis-(2-amidinopropane) dihydrochloride, isobutyramidine 2,2'-azobis N,N'-dimethylene)dihydrochloride, 2-(azo(1-cyano-1-methylethyl))-2-methylpropane nitrile, 2,2'-azobis[2-(2'-dimidazolin-2-yl)propane] dihydrochloride and 4,4'-azobis (4-cyanovaleric acid). Said polymerization initiators are used in usual amounts, for example in amounts of 0.001 to 2%, preferably 0.01 to 1% by weight, relative to the monomers to be polymerized.

As an oxidizing component, the redox catalysts contain at least one of the above compounds and, as a reducing component, for example ascorbic acid, glucose, sorbose, hydrogen sulfite, sulfite, thiosulfate, hyposulfite, pyrosulfite or an alkali metal, metal salts, such as in the form of iron (II) ions or silver ions or sodium hydroxy methyl sulfoxylate. The reducing component of the redox catalyst preferably used is the Mohr's salt (NH₄)₂Fe(SO₄)₂, 6 H₂O. Based on the number of monomers used in the polymerization, 5 x 10⁻⁶ to 1 mole% of the reducing component of the redox catalyst system and 5 x 10⁻⁵ to 2 moles% of the oxidizing component of the redox catalyst can, as an example, be used. Instead of the oxidizing component of the redox catalyst, one or more water-soluble azo initiators can also be used.

Optionally, the polymerization charge is flushed with an inert gas to remove residual dioxygen between step c) and d). Suitable inert gas for this purpose are, for example, nitrogen, carbon dioxide or rare gas such as neon, argon or helium.

Enzymatic methods can also be used to remove residual dioxygen, such as the use of glucose oxidase.

Preferably, between steps c) and d) of the process, dioxygen in solution S is eliminated by degassing or addition of glucose oxidase.

The polymerization is carried out in the absence of oxygen, by introducing the initiators in the appropriate order, known to those skilled in the art, into the aqueous solution S to be polymerized. The initiators are advantageously introduced dissolved in an aqueous solution and/or in an organic solvent.

### Step d) Polymerization to form a gel of polymer P1

After addition of the polymerization initiator, a gel of polymer **P1** is formed by polymerizing, in a polymerization reactor, the one or more monomer(s) in the aqueous solution **S.**

The polymerization in step d) of the method of the invention is carried out by radical route. It includes polymerization by free radicals by means of UV, azo, redox or thermal initiators as well as controlled radical polymerization (CRP) techniques or more particularly using the RAFT (Reversible Addition Fragmentation chain Transfer) type.

The polymerization may be carried out batchwise or continuously. In a batch procedure, a reactor is filled with a monomer solution and then with an initiator solution. As soon as the polymerization begins, the reaction mixture heats up depending on the starting conditions selected, such as the concentration of the monomers in the aqueous solution and the nature of the monomers. Due to the heat of polymerization released, the temperature of the reaction mixture rises, for example, from 30 to 180°C, preferably from 40°C to 130°C. The polymerization may be carried out at normal pressure, under reduced pressure or even at high pressure. Working at elevated pressure may be advantageous in cases where the maximum temperature expected in the polymerization is above the boiling point of the mixture of solvents used. On the other hand, it may be advantageous, during the preparation of products of very high molecular weight, to lower the maximum temperature by means of cooling, for example with a cooling fluid. In most cases, the reactor is jacketed so that the reaction mixture may be cooled or heated as needed. Once the polymerization reaction is complete, the obtained polymer gel may be quickly cooled, for example by cooling the wall of the reactor.

At the end of the reaction, the product resulting from the polymerization is a hydrated gel so viscous that it is self-supporting (thus a cube of gel of 2.5cm per side substantially maintains its shape when placed on a flat surface). The gel thus obtained is a viscoelastic gel.

Note that when the reaction is carried out in a reactor, in order to facilitate the discharge of the gel at the end of the reaction, the reactor is advantageously in inverted conical tubular form (cone downwards) in order to discharge the gel downwards by application of an inert gas or air pressure at the surface of the gel or in the form of a titler in order to discharge the mass of gel by titling the reactor.

### Step e) Granulation of the gel of polymer P1

After polymerization, the resulting gel of polymer **P1** is discharged from the polymerization reactor and granulated in step e) of the process of the invention.

Granulation consists of cutting the gel into small pieces. Advantageously, the average size of these pieces of gel is less than 1 cm, more advantageously it is between 4 and 8 mm. Those skilled in the art will know how to choose the means suitable for optimum granulation.

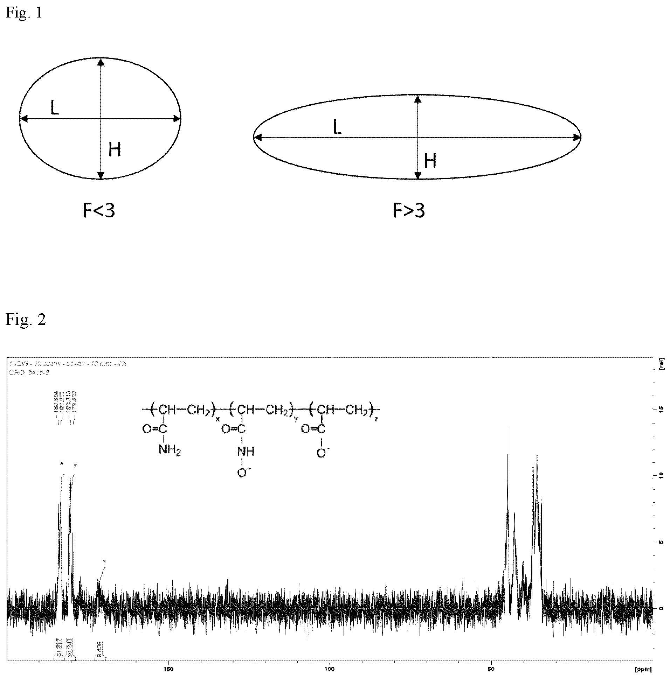

For optimum granulation, self-supporting property of the polymer gel is measured by cutting a 10 cm in diameter and 10 cm thick gel cylinder from the polymer mass, placing it on a flat surface and leave it to stand for 1 hour at 25°C. A form factor F is then defined on the volume obtained as the ratio of the horizontal section to the vertical section: F = L/H (see Figure 1).

If the ratio is less than 3, the gel is "self-supporting" and can be granulated. Otherwise, it is not self-supporting.

Optionally, a surfactant, may be added during granulation of step e) of the process of the invention. It can be added by spraying to the surface of the gel pieces. This optional surfactant is advantageously chosen from the list: alkyl aryl sulfonates, alkyl benzene sulfonates, alkyl sulfates, N-ethoxy sulfonates, sodium dodecyl sulfonate, propoxylated alcohol sulfates, ethoxylated alkyl sulfates, ethoxylated alcohol sulfates, alpha-olefin sulfonates, alpha-olefin sulfates, alkyl polyalkoxy alkyl sulfonates, alkyl aryl polyalkoxy alkyl sulfonates, branched alkyl benzene sulfonates, sodium docusate, ethoxylated glycidyl sulfonates, propoxylated glycidyl sulfonates, alkyl ether sulfates, Guerbet alkyl sulfates, internal olefin sulfonates, sulfonated ethoxylated alcohols, sulfonated alkyl phenols, sodium petroleum sulfonate, propoxylated alkyl alcohol sulfates, carboxylated ethoxy alkyls, polyglycoside alkyls, ethoxylated alcohols, propoxylated alcohols, propoxylated alcohol sulfates, ethoxylated alkyl phenols, polyethoxylated phenol alkyls, poly(ethylene/propylene) glycol ethers, N -ethoxylated secondary alcohols, N -propoxylated secondary alcohols, tridecyl ethoxylated alcohols, triphenylmethane, and mixtures thereof, with, for these surfactants:
- the alkyl groups being C4-C20,
- ethoxylated chains comprising between 6 and 100 -CH₂-CH₂ -O- groups,
- propoxylated chains comprising between 6 and 100 -CH₂ -CH₂ -CH₂-O- groups.

Advantageously, between 0,01% and 5,0% of surfactant in liquid form can be sprayed during step e) of the method of the invention (% by weight relative to the total weight of the at least (meth)acrylamide used in step a)).

### Step f) Formation of a polymer P2

After step e), the granulated gel of polymer **P1** is mixed with an alkali metal hydroxide or an alkali metal carbonate at a temperature of between 50 and 90°C, for between 30 and 180 minutes, to obtain a polymer **P2.**

Mixing of alkali metal hydroxide or an alkali metal carbonate with the granulated gel of polymer **P1** is typically carried out by spraying an aqueous solution of alkali metal hydroxide or carbonate into the granulated gel or by mixing solid particles of alkali metal hydroxide or carbonate with the granulated gel.

The alkali metal hydroxide or carbonate is preferably added as an aqueous solution. This aqueous solution is more preferably a sodium hydroxide solution. This solution contains advantageously between 30 and 50 % by weight of sodium hydroxide in water.

Spraying of the alkali metal hydroxide solution is preferably performed using a spraying nozzle. After spraying the metal hydroxide solution reacts with the granulated gel of polymer P1 for between 30 and 180 minutes, preferably 40 and 120 minutes to obtain a gel of polymer P2.

The gel is maintained at a temperature of between 50 and 90°C, preferably 70 and 90°C by preferably heating the air volume around the granulated gel with a heat pump.

### Steps g) and h) Obtention of polymer P2 in powder form

Step g) of the method consists in drying the gel of polymer P2 to obtain the polymer P2 in powder form. The choice of drying means is routine for those skilled in the art. Industrially, the drying is advantageously carried out by a fluidized bed or rotor dryer, using air heated to a temperature between 70°C and 200°C, the air temperature being a function of the nature of the product as well as the drying time applied. Another preferred means to dry the polymer, is heating of the air volume around the granulated gel with a heat pump. After drying, the water-soluble polymer **P2** is physically in powder form.

In the final step h) of the method, the powdered polymer **P2** is ground and sieved.

The grinding step involves breaking up the large polymer particles into smaller sized particles. This may be done by shearing or by mechanical crushing of the particle between two hard surfaces. Different types of equipment known to those skilled in the art may be used for this purpose. For example, we may reference mills with rotors, where one crushes the particle assisted by the rotating part on a compression blade or the roller mill, where the particle is crushed between two rotating cylinders.

The purpose of sieving is to then remove, depending on the specifications, the medium-sized particles that are too small or too large.

Advantageously, the water-soluble polymer **P2** obtained according to the method of the invention is in the form of a powder having an average particle size of between 100 and 1500 µm, even more preferably between 150 and 800 µm.

The mean size of the polymer particles, also called the median size (D₅₀) in number of the particles is defined as the largest dimension (the diameter in the case of spherical particles) of the particles for which half of the population (half of the particles) is below this value.

In the case of spherical particles, the particle size refers to the average diameter preferably measured using a laser diffraction particle analyser according to the conventional techniques of the person skilled in the art. An example of an apparatus for measuring the particle size is the Mastersizer from Malvern Instruments.

The invention also relates to a Bayer process to extract alumina from bauxite, wherein the water-soluble polymer **P2** according to the invention is used as flocculant to separate red mud from a sodium aluminate aqueous solution.

Advantageously, an aqueous solution containing between 1,0 and 5,0 % by weight of polymer **P2** in water is added in the flocculation tank.

The flocculation tank is preferably a thickener comprising a feed pipe, a feed well; an overflow pipe; a tank, a rake arm and an underflow pipe.

Preferably between 0,0001 and 0,5 % by weight of polymer **P2,** more preferably between 0,001 and 0.05% by weight, is added to the sodium aluminate aqueous solution to flocculate (by total weight of the solution).

The invention and its advantages will be better understood in the light of the following examples provided in order to illustrate the invention in a non-limiting manner.

Figure 1 shows how the form factor F is defined.

Figure 2 is a ¹³C NMR spectrum of a polymer according to the invention (example 1).

List of abbreviation:
AM: acrylamide;
AA: acrylic acid or sodium acrylate
HYD: hydroxamate

### EXAMPLES

### Example 1: Synthesis of a homopolymer of acrylamide functionalized by hydroxamate moieties P2a:

A polymer **P1a** is synthesized in aqueous solution by free-radical gel polymerization. 588 g of water, 750 g of acrylamide (50 % by weight in water), 75 g of sodium sulfate and 86,6 g of hydroxylamine sulfate (ratio of hydroxylamine sulfate/ acrylamide = 10 mol%) are added to a 2 L beaker (aqueous solution **S** in step a). Charge neutralization is carried out using 18 g of phosphoric acid (75 weight % in water) to achieve a pH of solution S between 2.0 - 2.5 (step b). The monomer concentration in aqueous solution **S** is 25% by weight. This aqueous solution **S** is cooled to between 5.0 and 10.0°C before being placed in a dewar. To the aqueous solution **S,** 35 ppm of heavy metal complexing agent in the form of the diethylene triamine penta-acetic pentasodium acid salt, Na₅DTPA (Versenex 80), and 200 ppm of azo catalyst in the form of 2,2'-Azobis (2-methylpropionamidine) dihydrochloride (V 50) are then added, based on the total amount of monomers involved. Aqueous solution **S** is then degassed under nitrogen bubbling for 20 minutes.

The reaction is then initiated by successive additions of 10 ppm sodium persulfate, followed by 10 ppm Mohr's salt (step c). The reaction lasted 180 minutes, with a final temperature of 92°C (step d). The polymer **P1a** obtained in gel form with an F factor of 1.95 can then be granulated (step e). 50 g of the granulated gel of polymer gel **P1a** is hydrolyzed with 16.1 g of aqueous sodium hydroxide solution (0 % weight % in water) at 85°C for 120 min (step f). The resulting gel of polymer **P2a** is dried in an air stream at 70°C for 60 minutes (step g). The dry particles of polymer **P2a** are then ground to a particle size of less than 1.0 mm (step h). The polymer **P2a** in powder form is 100% water-soluble and has a UL viscosity of 2.16 centipoises (cps) (Brookfield viscosimeter (23°c, module UL, 60 tr.min⁻¹, 0.1% weight % of polymer in NaCl 1M aqueous solution))

The final polymer **P2a** is composed of hydroxamate/acrylamide/sodium acrylate in the following molar ratio 9/30/61, determined by ¹H and ¹³C NMR (Figure 2).

### Comparative example 2 : Synthesis of a comparative homopolymer of acrylamide functionalized by hydroxamate moieties CE1-P2.

Comparative polymer **CE1-P2** is synthesized according to the procedure described in Example 1 except that the pH of the monomer solution **S** in step b) is adjusted to 3,5 with a phosphoric acid solution, followed by the addition of 86.6 g hydroxylamine sulfate.

The reaction time is 180 min, with a final temperature of 94°C. The resulting polymer gel obtained just after polymerization with a F factor of 1.8 and is granulated. This polymer is hydrolyzed under the same conditions as those described in Example 1. After drying, a 100% water-soluble polymer **CE1-P2** is obtained, with a UL viscosity of 2,7 cps, and is composed of HYD / AM / AA (molar ratio 0/51/49), determined by ¹H and ¹³C NMR.

The use of a pH outside the scope of the invention (pH < 3 in step b) of the invention) leads to the absence of hydroxamate groups formation in the polymer **CE1-P2.**

### Example 3: Influence of the pH of step b) on the polymerization process (polymer CE2-P2)

Comparative polymer **CE2-P2** is synthesized according to the procedure described in Example 1, except that the pH of the aqueous solution of step a) is not adjusted. The pH of the aqueous monomer solution **S** is measured to be between 4,0 and 4,5. The reaction time is 20 min with a final temperature of 18°C. The resulting polymer gel **CE2-P2** has an F factor = 6.2. Thus, the gel is soft and not self-supporting and cannot be granulated.

Therefore, absence of pH adjustment in the pH range claimed leads to a different polymer structure of the final polymer caused by a difference of reactivity during polymerization (comparison **P2a/CE2-P2).**

### Example 4: Influence of the hydroxylamine/AM ratio on the polymerization process.

In this example, different polymers ***CE3*/*4-P2 and P2b-e*** are synthesized, according to the procedure described in Example 1, except that the molar ratio of hydroxylamine sulfate is varied.

The viscosity of the resulting polymers was measured with a Brookfield viscosimeter (23°C, module UL, 60 tr.min⁻¹, 0.1% weight % of polymer in NaCl 1M aqueous solution).

The hydroxamate content of each polymer was determined by ¹H and ¹³C NMR.

The composition and results for the polymers prepared are presented in Table 1 below.

| **Polymer** | **Hydroxylamine/ AM ratio (mol%)** | **Viscosity UL (cps)** | **Hydroxamate HYD content in the final polymer (mol%)** |
|---|---|---|---|
| **CE3-P2** | 0 | 4.1 | 0 |
| **CE4-P2** | 5 | 3.05 | 4 |
| **P2a** | 10 | 2,16 | 9 |
| **P2b** | 15 | 1.4 | 15 |
| **P2c** | 20 | 1.3 | 18 |
| **P2d** | 25 | 1.2 | 22 |
| **P2e** | 30 | 1.2 | 26 |

| | | | |
|---|---|---|---|
| Table 1 : Influence of the hydroxylamine/AM ratio on polymerization process of polymers **P21** | | | |

An increase of the hydroxylamine / acrylamide ratio induces an increase of hydroxamate moieties content in polymers. On the contrary, increase of the molar ratio of hydroxamate leads to a reduction of viscosity of the final polymer and accordingly of the average molecular weight in weight (estimated by UL viscosity) with a maximum molecular weight obtained for polymer **P2a** (ratio = 10 mol%).

### Example 5: Influence of the AM concentration on the polymerization process.

In this example, polymers are synthesized, according to the procedure described in Example 1, using different acrylamide monomer concentrations in the polymerization solution of step a).

The viscosity of resulting polymers was measured with a Brookfield viscosimeter (23°C, module UL, 60 tr.min⁻¹, 0,1% weight % of polymers in NaCl 1M aqueous solution).

The monomeric content of each polymer was determined by ¹H and ¹³C NMR.

The acrylamide concentration used as well as the results of F-factor and viscosity for the different polymers **P2** are presented in Table 2 below.

**Table 2: Influence of the AM monomer concentration used in step a) on the F-factor and viscosity of the polymers P2f to P2k**

| **Polymer** | **AM concentration (% by weight)** | **F-factor** | **UL viscosity (cps)** | **Molar ratio of HYD/AM/AA in the polymer P2** |
|---|---|---|---|---|
| **P2f** | 30 % | 1,65 | 2,16 | 9,2/40/50.8 |
| **P2g** | 26 % | 1,8 | 2,46 | 8,4/42/49.6 |
| **P2h** | 24 % | 2,1 | 2,0 | 10,3/51/38.7 |
| **P2i** | 22 % | 2,2 | 2,30 | 8,7/49/42.3 |
| **P2j** | 20% | 2,9 | 2,80 | 9,5/47/43.5 |
| **P2k** | 18 % | 3,8 | 2,65 | 9,0/50/41 |

An increase of the monomer concentration for polymerization induces a decrease of the F-factor of polymer gel without modifying substantially the monomer content of the polymer and its average molecular weight (reflected by UL viscosity).

### Example 6: Influence of the nature of the salt used in step a) on the polymerization process

Different polymers are synthesized, according to the procedure described in Example 1, by substituting the sodium sulfate of step a) by other salts in the aqueous solution S.

The viscosity of resulting polymers was measured with a Brookfield viscosimeter (23°C, module UL, 60 tr.min⁻¹, 0,1% weight % of polymers in NaCl 1M aqueous solution).

The salts used and the results of F-factor and viscosity of the polymers are presented in Table 3 below.

**Table 3 : Influence of the nature of the salt in step a) of the process on the F-factor and viscosity of the polymers P22**

| **Polymer** | **Salt used in step a)** | **F-factor** | **UL viscosity (cps)** |
|---|---|---|---|
| **P2a** | Sodium sulfate | 1.95 | 2.16 |
| **P2l** | Ammonium sulfate | 2,4 | 1.7 |
| **CE5-P2** | Nothing | 3,2 | 2.0 |
| **CE6-P2** | Sodium chloride | 6 | Not determined |
| **CE7-P2** | Urea | 7 | Not determined |
| **CE8-P2** | Sodium thiosulfate | 5,5 | Not determined |

The nature of the salt influences the polymerization and the structure of the polymer gel.

### Example 7: Influence of the nature of the hydroxylamine salt on the polymerization process

Different polymers are synthesized, according to the procedure described in Example 1, by substituting sulfate hydroxylamine with another hydroxylamine salt.

The viscosity of resulting polymers was measured with a Brookfield viscosimeter (23°C, module UL, 60 tr.min⁻¹, 0,1% weight % of polymers in NaCl 1M aqueous solution).

The monomeric content of each polymer was determined by ¹H and ¹³C NMR.

The hydroxylamine used and the results of F-factor and viscosity of the polymers are presented in Table 4 below.

**Table 4 : Influence of the nature of the hydroxylamine on the F-factor and viscosity of the final polymers3**

| **Polymer** | **Hydroxylamine** | **F-factor** | **UL viscosity (cps)** | **Molar ratio of HYD/AM/AA in the polymer P2** |
|---|---|---|---|---|
| **CE9-P2** | Hydroxylamine (acid) | 2,7 | 3,2 | 1,5/63.5/52.5 |
| **P2a** | Hydroxylamine sulfate | 1,95 | 2.16 | 9,0/31/60 |
| **CE10-P2** | Hydroxylamine chloride | 2,4 | 1.8 | 6,5/34/59.5 |

Hydroxylamine sulfate enables many more hydroxamate groups to be grafted with a more structured polymer gel.

### Example 8: Evaluation of the polymers of the invention for red sludge flocculation in the Bayer process

The polymer **P2a** obtained by the process of the invention was tested as a red mud flocculant on an industrial Bayer liquor and compared to a commercial polymer Flomin AL 2926 having the same monomeric composition but obtained in inverse emulsion at different dosages.

The test procedure is as follows:
(i) Preparation of solutions of flocculant at a concentration of 3g/L
* The polymers are prepared by adding 1,5 g of polymer (powder or emulsion) to 500 mL of caustic solution (15 g.L⁻¹ NaOH in water) with vigorous stirring.
* The solution is left to stir for at least two hours to allow complete polymer release.
(ii) Decanting process
* Application tests are carried out using a 1L graduated test tube, into which the sludge to be tested is introduced.
* The industrial liquor is taken just before entering the high-temperature decanter (approx. 90°C).
* The suspension is then homogenized using a high-performance plunger.
* 50% of the flocculant solution dose is added to the test tube.
* 5 agitations are then performed with the perforated plunger
* The second half of the flocculant dose is then added.
* 5 agitations are then carried out again with the perforated plunger
* The solution is then left to settle freely:
   _ Sedimentation rate is measured by the time taken to settle between the 900- and 700-mL graduations of the graduated cylinder. This time is then divided by the distance between these two units.
   _ The clarity of the overflow is measured in NTU using a turbidimeter after 15 min of settling, by taking 5 mL of solution 5 cm from the top of the solution.
(iii) Flocculation results

**Table 5 : Comparison of the flocculation performances of the polymer of the invention P2a in comparison with the commercial polymer Flomin AL 29264**

| **Polymer** | **Commercial Polymer Flomin AL 2926** | | | **polymer of the invention P2a** | | |
|---|---|---|---|---|---|---|
| **Assay (g/t)** | 250 | 300 | 400 | 250 | 300 | 400 |
| **Settling speed (m/h)** | 1,9 | 4,2 | 5,8 | 1,7 | 3,5 | 5,2 |
| **Turbidity (NTU)** | 178 | 145 | 190 | 160 | 142 | 172 |

The application performance of the polymer **P2a** obtained by the process of the invention is satisfying and comparable to the performance of the commercial polymer in inverse emulsion.

Nevertheless, the polymer of the invention in powder form is highly advantageous in comparison to the use of a polymer in inverse emulsion that contain additional organic compounds (oil, surfactant) that accumulate in the liquor and degrade into humates which fouls the process and greatly reduces its yield.

Finally, using the polymer of the invention in the Bayer process not only improves its carbon footprint per ton of alumina produced, but also increases its efficiency.

## Claims

1. Gel polymerization method to obtain a water-soluble polymer **P2** of weight-average molecular weight Mw greater than 1 million Daltons in powder form, said process comprising at least the following successive steps:
a) Preparing an aqueous solution **S** comprising one or more monomer(s) including at least (meth)acrylamide, a hydroxylamine salt, and a sulfate salt of sodium or ammonium,
wherein the aqueous solution **S** comprises an amount of (meth)acrylamide of from 10 to 60% by weight of the aqueous solution **S,**
wherein the aqueous solution **S** comprises an amount MOL_{hydro} of the hydroxylamine salt,
wherein MOL_{hydro} is from 10 to 75 mol% based on the number of moles of (meth)acrylamide,
wherein the aqueous solution **S** comprises an amount MOL_{sulf} of the sulfate salt of sodium or ammonium, wherein MOL_{sulf} is from 0.9MOL_{hydro} to 1. 1MOL_{hydro};
b) Adding a pH regulator to the aqueous solution **S** to maintain the aqueous solution **S** at a pH below 3.0;
c) Adding polymerization initiator(s) to the aqueous solution **S,** which is at a temperature of between -5°C and 30°C;
d) Forming a gel of polymer **P1** by polymerizing, in a polymerization reactor, the monomer(s) in the aqueous solution S;
e) Discharging the resulting gel of polymer **P1** from the polymerization reactor and granulating the gel of polymer **P1**;
f) Mixing an alkali metal hydroxide or an alkali metal carbonate with the granulated gel of polymer **P1** at a temperature of between 50 and 90°C, for between 30 and 180 minutes, to obtain a polymer **P2;**
g) Drying the polymer **P2** to obtain polymer **P2** in powder form;
h) Grinding and sieving the powdered polymer **P2.**

2. Gel polymerization method according to claim 1, wherein the polymer **P2** has a weight-average molecular weight Mw of between more than 1 million Daltons and 40 million Daltons.

3. Gel polymerization method according to any one of claims 1 to 2, wherein in step b), the pH of the aqueous solution **S** is maintained below 2.5.

4. Gel polymerization method according to any one of the preceding claims, wherein in step a), the hydroxylamine salt is hydroxylamine sulfate or hydroxylamine chloride.

5. Gel polymerization method according to any one of the preceding claims, wherein in step a), the aqueous solution **S** comprises an amount of (meth)acrylamide of from 20 and 50% by weight.

6. Gel polymerization method according to any one of the preceding claims, wherein in step f), the granulated gel of polymer **P1** is mixed with an alkali metal hydroxide, which is an aqueous solution containing between 30 and 50 % by weight of sodium hydroxide.

7. Gel polymerization method according to any one of the preceding claims, wherein between steps c) and d), the aqueous solution S is degased or treated by addition of glucose oxidase to remove any dissolved dioxygen.

8. Gel polymerization method according to any one of the preceding claims, wherein at step g), polymer **P2** is dried at a temperature of between 50°C and 80°C for between 45 minutes and 90 minutes.

9. Gel polymerization method according to any one of the preceding claims, wherein in step a), the aqueous solution **S** is prepared in a polymerization reactor, which is an inverted conical tubular reactor.

10. Bayer process to extract alumina from bauxite, wherein the water-soluble **P2,** obtained by the method of any one of claims 1 to 9, is used as flocculant to separate red mud from a sodium aluminate aqueous solution.
